# EUROPÄISCHE PATENTANMELDUNG

(11) **EP 4 112 232 A1**
(43) Veröffentlichungstag der Anmeldung: **04.01.2023**
(21) Anmeldenummer: 22181426.2
(22) Anmeldetag: 28.06.2022
(51) Int. Cl.: B25F 5/02, B25G 1/04

(54) **BEDIENVORRICHTUNG**

(30) Priorität: 30.06.2021 DE 102021206897
(71) Anmelder: Robert Bosch GmbH, 70442 Stuttgart (DE)
(72) Erfinder: Moore, Helen, GB-IP14 3LE Suffolk (GB); Obbagy, Mate, HU-3531 Miskolc (HU); Atkins, Nathan, GB-NR15 2JQ Norfolk (GB); Jenkins, Rhys, GB-CB63WA Cambridgeshire (GB)

(57) **Zusammenfassung**

Die Erfindung geht aus von einer Bedienvorrichtung (10), insbesondere Verlängerungsgriffbedienvorrichtung, zur Aufnahme, Energieversorgung und Bedienung einer tragbaren Werkzeugmaschine (12), insbesondere über deren Akkupackschnittstelle (74), aufweisend eine Griffeinheit (32), eine Werkzeugmaschinenaufnahmeeinheit (14), eine Verlängerungseinheit (36) zur Beabstandung von Griffeinheit (32) und Werkzeugmaschinenaufnahmeeinheit (14), insbesondere eine Verlängerungsstange (38), und eine Akkupackaufnahmeeinheit (126), insbesondere zur lösbaren Aufnahme und elektrischen Kontaktierung eines Akkupacks (124), bevorzugt des Akkupacks (124) der tragbaren Werkzeugmaschine (12).

Es wird vorgeschlagen, dass die Akkupackaufnahmeeinheit (126) beabstandet zur Griffeinheit (32) ausgebildet ist, insbesondere beabstandet durch die Verlängerungseinheit (36).

## Beschreibung

### Stand der Technik

Es sind bereits Bedienvorrichtungen nach dem Oberbegriff des Anspruchs 1 bekannt. Beispielsweise sei auf die Druckschrift JP 6568418 B2 verwiesen.

### Offenbarung der Erfindung

Die Erfindung betrifft eine Bedienvorrichtung mit den Merkmalen des Anspruchs 1. Ferner betrifft die Erfindung ein Werkzeugmaschinensystem mit einer vorgenannten Bedienvorrichtung und einer tragbaren Werkzeugmaschine und/oder einem Akkupack.

Es wird eine Bedienvorrichtung vorgeschlagen, insbesondere eine Verlängerungsgriffbedienvorrichtung, zur Aufnahme, Energieversorgung und Bedienung einer tragbaren Werkzeugmaschine, aufweisend eine Griffeinheit, eine Werkzeugmaschinenaufnahmeeinheit, eine Verlängerungseinheit zur Beabstandung von Griffeinheit und Werkzeugmaschinenaufnahmeeinheit, insbesondere eine Verlängerungsstange und/oder Führungsstange, und eine Akkupackaufnahmeeinheit.

Es wird vorgeschlagen, dass die Akkupackaufnahmeeinheit beabstandet zur Griffeinheit und/oder Bedieneinheit ausgebildet ist, insbesondere beabstandet durch die Verlängerungseinheit, bevorzugt beabstandet durch die Verlängerungsstange und/oder Führungsstange. Insbesondere ist die Akkupackaufnahmeeinheit nicht an und/oder einstückig mit der Griffeinheit oder zumindest Teilen des Griffgehäuses der Griffeinheit bzw. des Handgriffgehäuses, ausgebildet. Bevorzugt schließt sich die Akkupackaufnahmeeinheit nicht vor oder hinter der Griffeinheit bzw. dem Handgriff an, insbesondere nicht unmittelbar vor oder hinter der Griffeinheit bzw. dem Handgriff an. Insbesondere ist die Werkzeugmaschinenaufnahmeeinheit und die Akkupackaufnahmeeinheit näher am bzw. im Bereich des gegenüberliegenden Endes der Verlängerungseinheit bzw. der Verlängerungs-, Führungs- oder Teleskopstange angeordnet, als die Griffeinheit. Vorteilhaft ist die Griffeinheit am einen distalen Ende der Verlängerungseinheit und/oder -stange angeordnet und die Akkupackaufnahmeeinheit am gegenüberliegenden distalen Ende der Verlängerungseinheit und/oder -stange. Vorteilhaft ist die Akkupackaufnahmeeinheit und/oder -schnittstelle unschwenkbar und/oder undrehbar relativ zu einer Lagereinheit angeordnet, wohingegen die Griffeinheit schwenkbar und/oder die Werkzeugmaschinenaufnahmeeinheit drehbar zur Lagereinheit angeordnet sind.

Die Werkzeugmaschinenaufnahmeeinheit ist die Schnittstelle oder weist zumindest eine Schnittstelle zur Aufnahme der Werkzeugmaschine auf, insbesondere ist die Schnittstelle zumindest teilweise, bevorzugt im Wesentlichen ausgebildet wie die Schnittstelle eines Akkupacks zur Verbindung mit der tragbaren Werkzeugmaschine, insbesondere eines Wechselakkupacks, bevorzugt eines Akkupacks für tragbare Handwerkzeugmaschinen, insbesondere für an der Werkzeugmaschinenaufnahmeeinheit lösbar aufnehmbare tragbare Werkzeugmaschinen. Die Werkzeugmaschinenaufnahmeeinheit ist zur mechanisch und elektrischen Verbindung mit einer tragbaren Werkzeugmaschine vorgesehen. Hierfür umfasst sie beispielsweise Formschluss, Rast und/oder Kontaktelemente. Darüber hinaus kann die Schnittstelle zur Aufnahme der Werkzeugmaschine, bevorzugt zur Aufnahme an deren Akkupackaufnahme und/oder Gehäuse- oder Griffeinheit, weitere Fixierelemente aufweisen, insbesondere um eine möglichst steife und/oder stabile Aufnahme der Werkzeugmaschine an der Werkzeugmaschinenaufnahmeeinheit sicherzustellen, beispielsweise das Gehäuse- oder die Griffeinheit umklammernde Formschlusselemente, insbesondere eine Art Gleitschuh bildend.

Die Verlängerungseinheit kann auch als Teleskopeinheit ausgebildet sein, insbesondere umfassend teleskopierbare Stangen oder Rohre oder dergleichen. Die Akkupackaufnahmeeinheit weist vorteilhaft eine Schnittstelle zur Aufnahme eines Akkupacks auf, insbesondere zur mechanischen und elektrischen Verbindung eines Akkupacks mit der Akkupackaufnahmeeinheit bzw. der Bedienvorrichtung. Vorteilhaft weist die Bedienvorrichtung stromleitende Elemente, insbesondere Kabel auf, die die Kontakte der Werkzeugmaschinenaufnahme und die Kontakte der Akkupackaufnahmeeinheit elektrisch verbinden, mitunter über ein zwischengeschaltetes Schalt-, Steuer-, oder Regelelement z.B. ein PCBA.

Die Beabstandung von Akkupackaufnahmeeinheit und Griffeinheit beträgt vorteilhaft mehr als die Hälfte, vorteilhaft mehr als Dreiviertel insbesondere in etwa die vollständige Länge der Verlängerungseinheit. Die Beabstandung beträgt insbesondere mehr als 50 cm, bevorzugt mehr als 75 cm, beispielweise rund 75 cm - 150 cm. Es ist aber auch eine größere Beabstandung von beispielweise 1,5 m bis 5 m vorstellbar, je nach Anwendungsfall oder Einsatzgebiet beispielsweise bei einer teleskopierbaren Verlängerungseinheit bzw. Bedienvorrichtung. Als beispielhafte Bedienvorrichtung bzw. Verlängerungsgriffbedienvorrichtung zur Aufnahme einer Grasschere als ein bevorzugtes Beispiel für eine tragbare Werkzeugmaschine, beispielweise zum Verfahren der Grasschere entlang von Mauern, Grundstücksgrenzen oder Graskanten, ist eine bodennahe bzw. fahrgestellnahe Anordnung der Akkupackaufnahmeeinheit vorteilhaft, wobei die Griffeinheit vorteilhaft im hüfthohen Bereich eines Anwenders oder darüber anzuordnen ist. Bei einer Schrägausrichtung der Verlängerungseinheit bzw. Verlängerungsstange (um eine gute Sichtbarkeit auf die Grasschere zu gewährleisten) beträgt die Beabstandung beispielweise 75-150 cm. Ebenso ist eine Beabstandung von Griffeinheit und Werkzeugmaschinenaufnahmeeinheit von beispielsweise 50-200 cm bei Überkopfarbeiten mit einer an der Werkzeugmaschinenaufnahmeeinheit der Bedienvorrichtung angeordneten Strauch- oder Heckenschere vorstellbar.

Unter einer "Bedienvorrichtung" soll insbesondere eine Vorrichtung verstanden werden, über die eine tragbare Werkzeugmaschine zu einer Bearbeitung von Gegenständen, insbesondere von Vegetation, bevorzugt zum Schneiden von Pflanzen halt- oder tragbar, steuerbar oder regelbar ist. Die Bedienvorrichtung ersetzt das direkte Greifen eines Handgriffs der tragbaren Werkzeugmaschine, insbesondere durch das Greifen einer (Ersatz-)Griffeinheit der Bedienvorrichtung, bzw. eines (Ersatz-)Handgriffs der Bedienvorrichtung, der gegenüber dem Handgriff der tragbaren Werkzeugmaschine beabstandet ist, insbesondere zumindest durch die Verlängerungseinheit beabstandet ist. An der Griffeinheit bzw. dem Handgriff der Bedienvorrichtung ist eine Bedieneinheit oder Bedienelemente, beispielweise ein Schalter, vorteilhaft ein Freigabe- und Betätigungsschalter angeordnet und/oder weitere Schaltelemente, HMI's und/oder Zustandsanzeigeelemente. So können bodennahe Arbeiten, Überkopfarbeiten oder andere, eine Distanz von tragbarer Werkzeugmaschine und Griffeinheit erfordernde Arbeiten, mit der tragbaren Werkzeugmaschine bequem über die Bedienvorrichtung durch einen Anwender verrichtet werden.

Die Bedienvorrichtung ist dazu vorgesehen die tragbare Werkzeugmaschine verliersicher aber lösbar aufzunehmen und diese über eine (Ersatz-)Bedieneinheit an der Griffeinheit der Bedienvorrichtung steuern oder regeln zu können. Über die Bedienvorrichtung lässt sich zumindest mittelbar eine Antriebs- und/oder Steuereinheit der tragbaren Werkzeugmaschine steuern oder regeln. Die Bedienvorrichtung dient der Bedienung, insbesondere der Aktivierung, Deaktivierung, einem Führen, Halten, Schieben, Ausrichten und/oder dergleichen der tragbaren Werkzeugmaschine. Ferner kann über die Bedienvorrichtung, insbesondere durch Fixierung und Kontaktierung eines Akkupacks an der Bedienvorrichtung, eine Energieversorgung der tragbaren Werkzeugmaschine erreicht werden, insbesondere ohne dass ein Akkupack unmittelbar an der tragbaren Werkzeugmaschine fixiert ist, sondern ersatzweise an der Bedienvorrichtung appliziert wird, insbesondere an der Akkupackaufnahmeeinheit der Bedienvorrichtung fixiert wird. Vorteilhaft kann der mit der tragbaren Werkzeugmaschine kompatible, sprich an ihr anordenbare Akkupack, statt an der tragbaren Werkzeugmaschine, an der Bedienvorrichtung, insbesondere an deren Akkupackaufnahmeschnittstelle der Bedienvorrichtung mechanisch aufgenommen und elektrisch kontaktiert werden, insbesondere mit Kontakten der Werkzeugmaschinenaufnahme verbunden werden. Damit ermöglicht die Bedienvorrichtung die Energieversorgung der tragbaren Werkzeugmaschine, bevorzugt durch die Aufnahme des auch unmittelbar an der tragbaren Werkzeugmaschine applizierbaren Akkupacks. Bevorzugt wird die tragbare Werkzeugmaschine wiederum zumindest über ihrer Akkupackaufnahmeschnittstelle an der Werkzeugmaschinenaufnahmeeinheit der Bedienvorrichtung aufgenommen bzw. fixiert und elektrisch und/oder signaltechnisch kontaktiert bzw. mit der Bedienvorrichtung verbunden, wodurch eine zusätzliche Aufnahmeschnittstelle (separat von der Akkupackaufnahmeschnittstelle) an der tragbaren Werkzeugmaschine entfällt. Eine einfache und intuitive Verbindung mit der Bedienvorrichtung kann erzielt werden. Die Bedienvorrichtung kann elektrisch und vorteilhaft auch signaltechnisch, mit der tragbaren Werkzeugmaschine zu deren Aufnahme, Energieversorgung und Bedienung verbunden werden. Somit ist die Bedienvorrichtung zu einer Aufnahme einer tragbaren Werkzeugmaschine vorgesehen. Unter "vorgesehen" soll insbesondere speziell ausgelegt und/oder ausgestattet verstanden werden.

Die tragbare Werkzeugmaschine weist insbesondere eine Masse auf, die kleiner ist als 40 kg, bevorzugt kleiner ist als 10 kg und insbesondere kleiner ist als 5 kg. Bevorzugt ist die tragbare Werkzeugmaschine als elektrisch betreibbares Gartengerät ausgebildet, das zu einer Bearbeitung, insbesondere dem Schneiden, von Hecken und/oder Grashalmen vorgesehen ist. Somit ist die tragbare Werkzeugmaschine bevorzugt als elektrische Grasschere und/oder als elektrische Strauchschere ausgebildet. Es ist jedoch auch denkbar, dass die tragbare Werkzeugmaschine eine andere, einem Fachmann als sinnvoll erscheinende Ausgestaltung aufweist, wie beispielsweise eine Ausgestaltung als Säge oder dergleichen. Bevorzugt ist die tragbare Werkzeugmaschine zu einer Bearbeitung bzw. einem Schneiden von Grashalmen, Grasflächen, Büschen, Ästen usw. an der Bedienvorrichtung anordenbar. Hierzu umfasst die Bedienvorrichtung bevorzugt die Werkzeugmaschinenaufnahmeeinheit, an der die tragbare Werkzeugmaschine anordenbar ist und/oder in der die tragbare Werkzeugmaschine zumindest teilweise anordenbar ist. Insbesondere ist zumindest ein Gehäuse-, Griff-, und/oder Akkupackaufnahmebereich der tragbaren Werkzeugmaschine in einem an der Werkzeugmaschinenaufnahmeeinheit angeordneten Zustand der tragbaren Werkzeugmaschine zumindest teilweise in einer Aufnahmeausnehmung, insbesondere einer den Gehäuse- oder Griffbereich von vorteilhaft fünf Seiten (oben, unten, rechts, links, hinten) vorteilhaft form- und/oder kraftschlüssig umschließenden Aufnahmeausnehmung, angeordnet.

Die Werkzeugmaschinenaufnahmeeinheit weist, zu einer Aufnahme der tragbaren Werkzeugmaschine, zumindest eine Fixiereinheit auf, die zumindest ein Fixierelement, zu einer lösbaren Fixierung der tragbaren Werkzeugmaschine in einem an der Werkzeugmaschinenaufnahmeeinheit angeordneten Zustand aufweist. Der Ausdruck "Fixiereinheit" soll hier insbesondere eine Einheit definieren, die die tragbare Werkzeugmaschine in einem an der Werkzeugmaschinenaufnahmeeinheit angeordneten Zustand der tragbaren Werkzeugmaschine zumindest in einer Richtung gegen eine Bewegung relativ zur Werkzeugmaschinenaufnahmeeinheit sichert. Bevorzugt ist die Fixiereinheit als Formschlussfixiereinheit ausgebildet. Insbesondere ist die Fixiereinheit als Kraftschlussfixiereinheit oder als Magnetkraftfixiereinheit usw. oder besonders bevorzugt als Kombination aus Form- und Kraftschlusseinheit ausgebildet. Ein Fixierelement ist bevorzugt als Formschlussfixierelement ausgebildet. Bevorzugt wirkt das Fixierelement in einem an der Werkzeugmaschinenaufnahmeeinheit angeordneten Zustand der tragbaren Werkzeugmaschine und einem mittels der Fixiereinheit fixierten Zustand mit einem an einem Werkzeugmaschinengehäuse der tragbaren Werkzeugmaschine angeordneten Gegenfixierelement zusammen.

Vorteilhaft lässt sich durch die erfindungsgemäße Bedienvorrichtung die Menge bzw. Länge von für die Stromversorgung der tragbaren Werkzeugmaschine vorgesehenen Kabeln innerhalb der Bedienvorrichtung gegenüber dem Stand der Technik verringern. Es kommt zu weniger EMV Strahlung und/oder EMV-Problemen. Die Kosten können durch die reduzierte Kabellänge bzw. -menge reduziert werden. Eine aufwendige Kabelverlegung insbesondere durch eine Schwenkvorrichtung zum Verschwenken der Verlängerungseinheit bzw. der Griffeinheit gegenüber der Lager- oder Werkzeugmaschinenaufnahmeeinheit und/oder eine Durchführung durch die Verlängerungsvorrichtung und/oder durch teleskopierbare Verlängerungsstangen- oder Rohre, entfällt. Ein Schwerpunkt der Bedienvorrichtung bei appliziertem Akkupack verschiebt sich in Richtung der Werkzeugmaschinenaufnahmeschnittstelle bzw. Lagereinheit. Dadurch wird die Bedienvorrichtung beispielweise bei einer bodennahen Verwendung, insbesondere in Verbindung mit einer Grasschere, stabiler gegen kippen. Die Belastung für den Nutzer, insbesondere durch weniger über die Griffeinheit zu tragendes Gewicht (da der Akkupack nicht griffnah, sondern lagereinheitsnah angeordnet ist und somit gehalten ist) verringert sich.

Es wird vorgeschlagen, dass die Akkupackaufnahmeeinheit benachbart zur Werkzeugmaschinenaufnahmeeinheit angeordnet ist, insbesondere mit einem Abstand, bevorzugt einem minimalen Abstand, von weniger als 30 cm, bevorzugt von weniger als 20 cm, besonders bevorzugt von weniger als 15 cm benachbart zur Werkzeugmaschinenaufnahmeeinheit. Ein Abstand von Akkupackaufnahmeeinheit und Werkzeugmaschinenaufnahmeeinheit ist kleiner, insbesondere sehr viel kleiner, als ein Abstand von Akkupackaufnahmeeinheit und/oder Werkzeugmaschinenaufnahmeeinheit zur Griffeinheit. Unter sehr viel kleiner soll insbesondere weniger als 50%, bevorzugt weniger als 33%, besonders bevorzugt rund 1 - 25% des Abstands von Akkupackaufnahmeeinheit und/oder Werkzeugmaschinenaufnahmeeinheit zur Griffeinheit verstanden werden. Auch durch die benachbarte bzw. vorgenannte Anordnung lassen sich im vorherigen Absatz genannten Vorteile erzielen.

Es wird vorgeschlagen, dass die Akkupackaufnahmeeinheit separat von der Werkzeugmaschinenaufnahmeeinheit ausgebildet ist, insbesondere nicht einstückig mit der Werkzeugmaschinenaufnahmeeinheit ausgebildet ist. Bevorzugt ist die Werkzeugmaschinenaufnahmeeinheit drehbar zur Akkupackaufnahmeeinheit ausgebildet. Durch die separate Anordnung verlagert sich mitunter der Schwerpunkt der Bedienvorrichtung bei Verdrehen der tragbaren Werkzeugmaschine weniger als wenn der Akkupack mit der Werkzeugmaschinenaufnahmeeinheit verdrehen würde. Auch kann dadurch mitunter die Bedienvorrichtung dichter entlang von Wänden, Rändern oder Mauern manövriert bzw. entlanggefahren oder - bedient werden.

Es wird vorgeschlagen, dass die Akkupackaufnahmeeinheit ortsfest zu einer Lagereinheit bzw. Lagervorrichtung, insbesondere zumindest teilweise einstückig mit einer Lagereinheit, insbesondere ortsfest zu bzw. einstückig mit einer Fahrgestelleinheit, ausgebildet ist. Unter Lagereinheit oder Lagervorrichtung soll eine Einheit, beispielsweise ein oder mehrere Gehäuseelemente oder dergleichen verstanden werden, an der beispielsweise ein oder mehrere Gleit-, Rutsch- und/oder Rollelemente aufgenommen sind. Ferner dient die Lagereinheit vorteilhaft als Mittel- oder Verbindungsstück zwischen Werkzeugmaschinenaufnahmeeinheit und Verlängerungseinheit und/oder Akkupackaufnahmeeinheit. Als Rutschelemente können bespielweise PTFE Auflieger, Bürsten oder Borsten Verwendung finden, als Rollelemente beispielsweise Räder. Insbesondere für die Räder bildet die Lagereinheit quasi die Fahrgestelleinheit bzw. das Fahrgestell. Vorteilhaft kann über die Rutsch- und/oder Rollelemente die Bedienvorrichtung rutsch- oder rollbar zu einem Untergrund abgestützt werden, insbesondere dem Boden, einer Wand etc. Dadurch, dass die Akkupackaufnahmeeinheit ortsfest zur und/oder zumindest teilweise einstückig mit der Lagereinheit ausgebildet ist, ist die Akkuposition gegenüber der Lagereinheit, insbesondere der Fahrgestelleinheit, bevorzugt gegenüber dem Untergrund fixiert und/oder festlegbar. Insbesondere ist eine Anordnung des Schwerpunkts der Akkupackaufnahmeeinheit und/oder des Akkupacks im Bereich einer Mittenebene der Lagereinheit, insbesondere Gehäusetrennebene der Lagereinheit, vorgesehen und/oder möglichst vertikal über der durch die Rutsch- oder Rollelemente abgestützten Lagereinheit bzw. vertikal über der Rutsch- oder Rollebene.

Es wird vorgeschlagen, dass die Werkzeugmaschinenaufnahmeeinheit, die Verlängerungseinheit und/oder die Griffeinheit dreh- und/oder schwenkbar zur Akkupackaufnahmeeinheit und/oder Lagereinheit ausgebildet ist/sind. Insbesondere ist die Verlängerungseinheit mit der Griffeinheit schwenkbar und die Werkzeugmaschinenaufnahmeeinheit drehbar zur Akkupackaufnahmeeinheit und Lagereinheit ausgebildet. Insbesondere dient die Lagereinheit als Zwischenstück zwischen einer insbesondere schwenkbar an ihr festlegbaren Verlängerungsstangenaufnahme und der drehbar zu ihr anordenbaren Werkzeugmaschinenaufnahmeeinheit.

Es wird vorgeschlagen, dass die Werkzeugmaschinenaufnahmeeinheit und Ackupackaufnahmeeinheit winkelig zueinander angeordnet sind, insbesondere in einem Winkel von mindestens 85°, bevorzugt 110-160°, insbesondere rund 125°. Vorteilhaft sind Steckachsausrichtungen bzw. Verbindungssteckachsen, in Richtung derer die tragbare Werkzeugmaschine bzw. der Akkupack mit der Werkzeugmaschinenaufnahmeeinheit bzw. Akkupackaufnahmeeinheit verbunden werden kann, winkelig zueinander angeordnet bzw. ausgerichtet, vorteilhaft in den vorgenannten Winkeln. Dadurch kann eine komfortable Verbindung der tragbaren Werkzeugmaschine und/oder des Akkupack an der Bedienvorrichtung erreicht werden. Insbesondere ist eine Ausrichtung der Steckachsausrichtung des Akkupacks und eine Ausrichtung des Einsatzwerkzeugs bzw. der Einsatzwerkzeugebene (Ebene in der das Einsatzwerkzeug seine Schneid- oder Bearbeitungsbewegung vollzieht) orthogonal zueinander angeordnet. Bei Verwendung einer Gras- oder Strauchschere kann dadurch, die an der Bedienvorrichtung applizierte tragbare Werkzeugmaschine, auf dem Boden aufliegen (Einsatzwerkzeugebene ist parallel zum Boden) und der Akkupack kann vertikal hierzu in die Akkupackaufnahmeeinheit eingeschoben bzw. von ihr abgezogen werden. Dies ermöglicht eine komfortable Bedienung und gute Zugänglichkeit zum Fixieren bzw. der Abnahme von tragbarer Werkzeugmaschine bzw. Akkupack an/von der Bedienvorrichtung.

Es wird vorgeschlagen, dass die Bedienvorrichtung elektrische und signaltechnische Kontaktelemente aufweist, insbesondere beabstandet voneinander ausgebildete elektrische und signaltechnische Kontaktelemente. Vorteilhaft weisen die elektrischen und signaltechnischen Kontaktelemente einen Längsversatz bezüglich der Verbindungssteckachse auf, mitunter auch einen Querversatz. Vorteilhaft kann so eine Vielzahl an Elektronikverbindungselementen bzw. Kontaktelementen gleichzeitig bzw. synchron verbunden werden. Vorteilhaft kann die tragbare Werkzeugmaschine dadurch sowohl unmittelbar mit dem Akkupack, als auch unmittelbar mit der Bedienvorrichtung verbunden werden und zwar jeweils mit der Akkupackaufnahmeschnittstelle der tragbaren Werkzeugmaschine. Zusätzlich zur rein elektrischen Kontaktierung von Akkupack und Werkzeugmaschine lassen sich über die signaltechnischen Kontaktelemente Bedien- und/oder Zustandssignale der Bedieneinheit der Bedienvorrichtung an die tragbare Werkzeugmaschine, insbesondere eine Steuer- oder Regelung der tragbaren Werkzeugmaschine bzw. Zustandssignale der tragbaren Werkzeugmaschine an die Griffeinheit bzw. Bedieneinheit der Bedienvorrichtung übertragen.

Es wird vorgeschlagen, dass eine Verbindungssteckachse der Akkupackaufnahmeeinheit entlang derer der Akkupack auf die Akkupackaufnahmeeinheit aufgesteckt werden kann, orthogonal zur Drehachse der Werkzeugmaschinenaufnahmeeinheit ausgebildet ist. Auch dadurch ist ein Aufstecken bzw. Abziehen des Akkupacks von der Akkupackaufnahmeeinheit gut möglich. Dadurch lässt sich bei einer beabsichtigten Verdrehung der Werkzeugmaschinenaufnahmeeinheit bzw. der daran fixierten tragbaren Werkzeugmaschine, z.B. zur Ausführung eines Vertikalschnitts statt Horizontalschnitts die Bedienvorrichtung leicht am Akkupack fixieren. Vorteilhaft ist die Akkupackaufnahmeeinheit bzw. Verbindungssteckachse innerhalb einer die Lagereinheit, das Fahrgestell und oder die Fahrwerkseinheit in Verbindungssteckachsrichtung umgebenden Hüllkontur angeordnet. Dadurch kann ein durch die Anordnung des Akkupacks an der Akkupackaufnahmeeinheit mitunter um die Lagereinheit und/oder Fahrwerkseinheit wirkendes Drehmoment, geringgehalten werden. Ein durch den Nutzer aufzubringendes Gegenmoment bzw. Haltekraft an der Griffeinheit, insbesondere bei an der Werkzeugmaschinenaufnahmeeinheit der Bedienvorrichtung angeordneter tragbarer Werkzeugmaschine, bleibt zumindest gering, insbesondere geringer als bei Anordnung des Akkupacks an oder im Bereich der Griffeinheit der Bedienvorrichtung.

Es wird vorgeschlagen, dass die Bedienvorrichtung ein Anzeigeelement im Bereich der Griffeinheit aufweist, insbesondere integriert in das Griffgehäuse der Griffeinheit, dass eine Zustands- und/oder Ladestandanzeige der an der Werkzeugmaschinenaufnahmeeinheit angeordneten tragbaren Werkzeugmaschine und/oder des an der Akkupackaufnahmeeinheit angeordneten Akkupack ausgibt, insbesondere anzeigt, bevorzugt als Ampelfarb-, Licht-, Symbol- und/oder Füllstandsanzeige.

Unter einer "Bedienvorrichtung" soll insbesondere eine Vorrichtung verstanden werden, an der die tragbare Werkzeugmaschine zu einer Bearbeitung von Gegenständen, insbesondere von Vegetation, bevorzugt zum Schneiden von Pflanzen anordenbar, insbesondere fixierbar, ist. Somit ist die Bedienvorrichtung zu einer Aufnahme einer tragbaren Werkzeugmaschine vorgesehen. Bevorzugt ist die tragbare Werkzeugmaschine zu einer Bearbeitung von Grashalmen, Grasflächen, Büschen, Ästen usw. an der Bedienvorrichtung anordenbar. Hierzu umfasst die Bedienvorrichtung bevorzugt die Werkzeugmaschinenaufnahmeeinheit, an der die tragbare Werkzeugmaschine zumindest teilweise anordenbar ist und/oder in der die tragbare Werkzeugmaschine zumindest teilweise anordenbar ist. Hierbei ist zumindest ein Gehäuse- oder Griffbereich der tragbaren Werkzeugmaschine in einem an der Werkzeugmaschinenaufnahmeeinheit angeordneten Zustand der tragbaren Werkzeugmaschine vorzugsweise zumindest teilweise in einer Aufnahmeausnehmung der Werkzeugmaschinenaufnahmeeinheit, insbesondere einer den Gehäuse- oder Griffbereich von zumindest drei bevorzugt vier oder fünf Seiten umschließenden Aufnahmeausnehmung, angeordnet. Besonders bevorzugt umfasst die Bedienvorrichtung ferner zumindest eine Bedieneinheit zu einer Bedienung der tragbaren Werkzeugmaschine in einem an der Werkzeugmaschinenaufnahmeeinheit angeordneten Zustand. Ein oder mehrere Elektronikverbindungselemente sind zu einer elektrischen Verbindung der tragbaren Werkzeugmaschine und der Bedieneinheit in einem an der Werkzeugmaschinenaufnahmeeinheit angeordneten Zustand vorgesehen. Unter einer "Bedieneinheit" soll hier insbesondere eine Einheit verstanden werden, die zumindest ein Bauteil aufweist, das direkt von einem Bediener betätigbar ist, und die dazu vorgesehen ist, durch eine Betätigung und/oder durch eine Eingabe von Parametern einen Prozess und/oder einen Zustand einer mit der Bedieneinheit gekoppelten Einheit zu beeinflussen und/oder zu ändern. Besonders bevorzugt ist die Bedieneinheit dazu vorgesehen, infolge einer Betätigung eines Bedienelements die tragbare Werkzeugmaschine in einem an der Werkzeugmaschinenaufnahmeeinheit angeordneten Zustand der tragbaren Werkzeugmaschine in Betrieb zu nehmen bzw. außer Betrieb zu setzen. Hierbei ist die Bedieneinheit insbesondere dazu vorgesehen, eine Stromversorgung einer Antriebseinheit der tragbaren Werkzeugmaschine zu unterbrechen und/oder herzustellen, insbesondere mittels zumindest eines Schalterelements und/oder einer elektronischen Steuer- oder Regelung. Vorzugsweise ist eine Elektronik der tragbaren Werkzeugmaschine mittels der Elektronikverbindungseinheit mit der Bedieneinheit, insbesondere mit einem Schalterelement der Bedieneinheit, elektrisch verbunden.

Des Weiteren wird vorgeschlagen, dass die Bedienvorrichtung, insbesondere die Verlängerungseinheit eine Führungsstangeneinheit aufweist. Die Führungsstangeneinheit kann zumindest zwei relativ zueinander beweglich gelagerte, bevorzugt entlang einer gemeinsamen Achse beweglich gelagerte, Führungsstangenelemente zu einer Einstellung einer Position der Bedieneinheit relativ zur Werkzeugmaschinenaufnahmeeinheit umfassen und/oder dass die Bedienvorrichtung, insbesondere an der Lagereinheit angeordnet ein Schwenkwinkeleinstellelement aufweist um die Griffeinheit gegenüber der Werkzeugmaschinenaufnahmeeinheit zu verschwenken und vorteilhaft zu arretieren. Hierdurch kann vorteilhaft eine für einen Bediener komfortable Arbeitsposition der Bedieneinheit relativ zur Werkzeugmaschinenaufnahmeeinheit eingestellt werden. Es kann vorteilhaft eine an eine Körpergröße angepasste Arbeitsposition der Bedieneinheit relativ zur Werkzeugmaschinenaufnahmeeinheit eingestellt werden. Somit kann ein hoher Arbeitskomfort für einen Bediener mittels der Bedienvorrichtung erreicht werden.

Ferner wird vorgeschlagen, dass die Bedienvorrichtung zumindest eine Fahrwerkseinheit umfasst, mittels derer die Werkzeugmaschinenaufnahmeeinheit auf einem Untergrund verfahrbar ist. Besonders bevorzugt ist die Fahrwerkseinheit an der Lagereinheit anordenbar. Die Fahrwerkseinheit umfasst bevorzugt zumindest zwei Radelemente, die drehbar an der Lagereinheit gelagert sind. Es kann vorteilhaft ein für einen Bediener energiesparender Arbeitsprozess ermöglicht werden. Es kann vorteilhaft ein komfortables Bearbeiten von Grashalmen, insbesondere im Bereich von Grasnarben, ermöglicht werden.

Zudem wird vorgeschlagen, dass die Bedienvorrichtung zumindest die Führungsstangeneinheit und zumindest eine Lagereinheit umfasst, die die Werkzeugmaschinenaufnahmeeinheit schwenkbar um zumindest eine Lagerachse relativ zur Führungsstangeneinheit lagert. Bevorzugt verläuft die Lagerachse zumindest im Wesentlichen quer oder quer versetzt zu einer Längsachse zumindest eines Führungsstangenelements der Führungsstangeneinheit. Unter "zumindest im Wesentlichen quer" soll hier insbesondere eine Ausrichtung einer Ebene und/oder einer Richtung relativ zu einer weiteren Ebene und/oder einer weiteren Richtung verstanden werden, die bevorzugt von einer parallelen Ausrichtung der Ebene und/oder der Richtung relativ zu der weiteren Ebene und/oder der weiteren Richtung abweicht. Vorzugsweise sind die Führungsstangenelemente der Führungsstangeneinheit hohlzylinderförmig ausgebildet. Hierbei sind die Führungsstangenelemente bezogen auf die Längsachsen der Führungsstangenelemente bevorzugt rotationssymmetrisch ausgebildet. Es ist jedoch auch denkbar, dass die Führungsstangenelemente eine andere, einem Fachmann als sinnvoll erscheinende Ausgestaltung aufweisen, wie beispielsweise eine Ausgestaltung als stangenartige Elemente, die einen polygonalen Querschnitt aufweisen, usw. Besonders bevorzugt bildet die Führungsstangeneinheit eine Teleskopführungsstangeneinheit. Mittels der erfindungsgemäßen Ausgestaltung kann vorteilhaft eine Anpassung einer Position der Werkzeugmaschinenaufnahmeeinheit relativ zur Führungsstangeneinheit erreicht werden. Es kann vorteilhaft eine große Einsatzflexibilität der Bedienvorrichtung erreicht werden.

Vorteilhafterweise lagert die Lagereinheit die Werkzeugmaschinenaufnahmeeinheit schwenkbar um zumindest zwei zumindest im Wesentlichen quer zueinander verlaufende Lagerachsen relativ zur Verlängerungs- bzw. Führungsstangeneinheit. Bevorzugt verlaufen die zumindest zwei Lagerachsen, betrachtet in einer Projektionsebene, in die die Lagerachsen projiziert sind, zumindest im Wesentlichen senkrecht zueinander. Somit kann eine Position der Werkzeugmaschinenaufnahmeeinheit relativ zur Verlängerungs- bzw. Führungsstangeneinheit vorteilhaft an verschiedene Einsatzgebiete der Bedienvorrichtung angepasst werden.

Des Weiteren wird vorgeschlagen, dass das/die Elektronikverbindungselement(e) als Kontaktelemente, insbesondere als Stecker- oder Buchskontaktelement(e) ausgebildet ist/sind. Bevorzugt umfasst die tragbare Werkzeugmaschine ein mit dem(n)n Kontaktelement(en) korrespondierend ausgebildete(s) Stecker- oder Buchskontaktelement(e), zur Ermöglichung einer elektrischen oder signaltechnischen Verbindung. Es ist jedoch auch denkbar, dass das Elektronikverbindungselement eine andere, einem Fachmann als sinnvoll erscheinende Ausgestaltung aufweist.

Ferner geht die Erfindung aus von einem Werkzeugmaschinensystem mit zumindest einer tragbaren Werkzeugmaschine und mit zumindest einer erfindungsgemäßen Bedienvorrichtung.

Die erfindungsgemäße Bedienvorrichtung und/oder das erfindungsgemäße Werkzeugmaschinensystem sollen/soll hierbei nicht auf die oben beschriebene Anwendung und Ausführungsform beschränkt sein. Insbesondere können/kann die erfindungsgemäße Bedienvorrichtung und/oder das erfindungsgemäße Werkzeugmaschinensystem zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein erfindungsgemäßes Werkzeugmaschinensystem mit einer tragbaren Werkzeugmaschine, einem Akkupack und mit einer erfindungsgemäßen Bedienvorrichtung in einer schematischen Darstellung, hier in einer Seitenansicht,
- Fig. 2: eine perspektivische Ansicht der erfindungsgemäßen Bedienvorrichtung,
- Fig. 3: eine Seitenansicht der erfindungsgemäßen Bedienvorrichtung, (hier von der zu Fig. 1 gegenüberliegenden Seite der Bedienvorrichtung),
- Fig. 4: eine Frontansicht der erfindungsgemäßen Bedienvorrichtung,
- Fig. 5: das erfindungsgemäßes Werkzeugmaschinensystem aus Figur 1 in mehreren Schwenkpositionen.

### Beschreibung des Ausführungsbeispiels

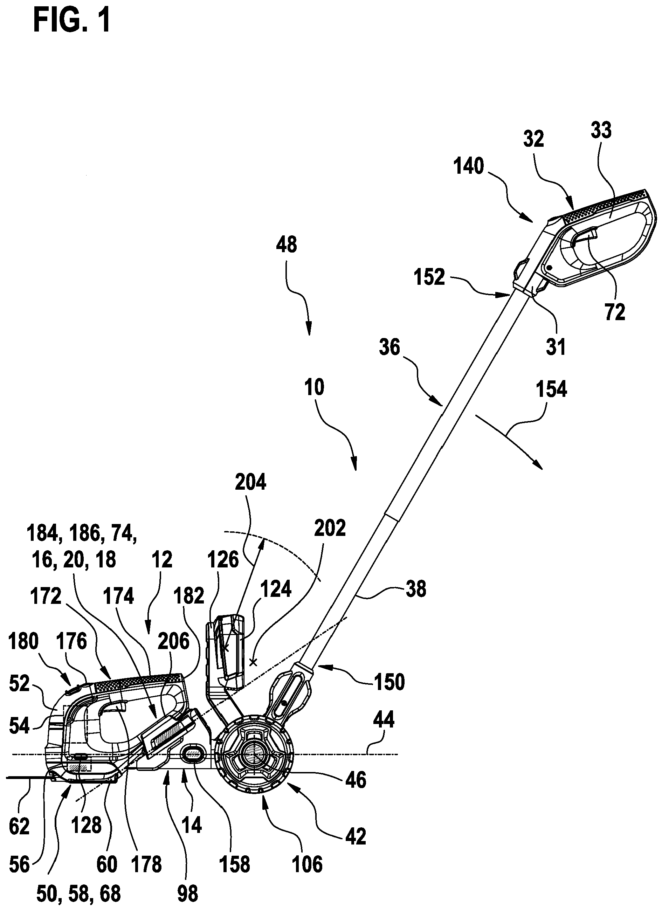

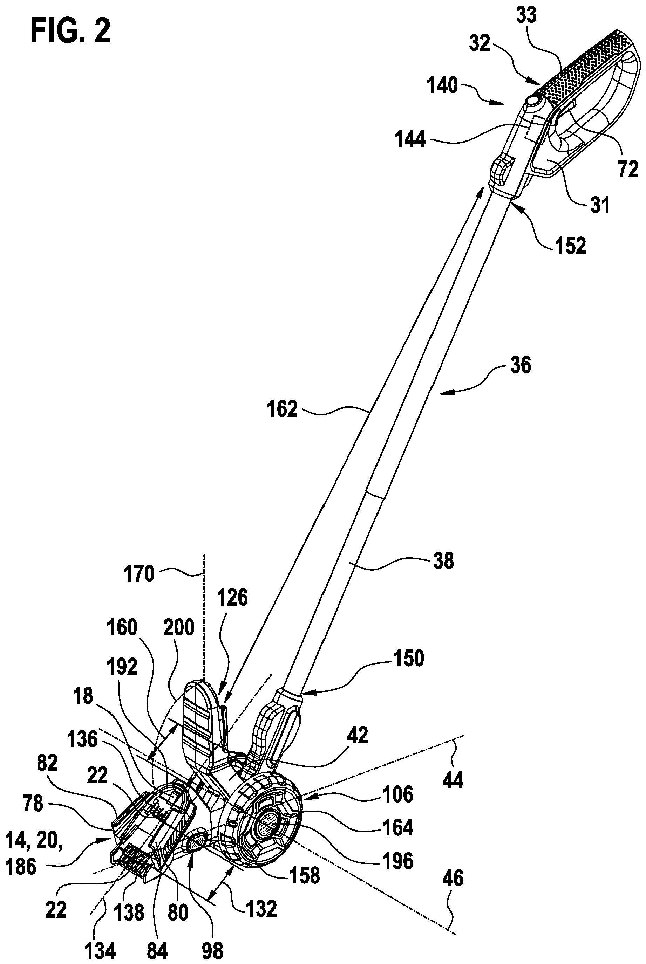

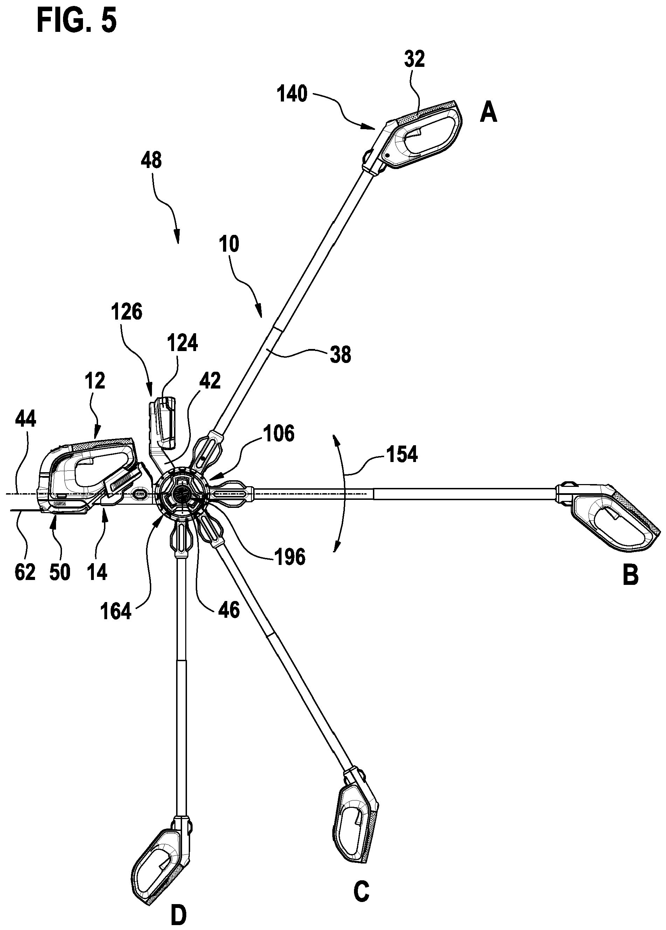

Figur 1 und 5 zeigen ein erfindungsgemäßes Werkzeugmaschinensystem 48 mit einer tragbaren Werkzeugmaschine 12, einem Akkupack 124 und mit einer erfindungsgemäßen Bedienvorrichtung 10. An einer Akkupackaufnahmeeinheit 126 bzw. Akkupackaufnahmeschnittstelle der Bedienvorrichtung 10 ist der Akkupack 124 aufgenommen; an einer Werkzeugmaschinenaufnahmeeinheit 14 bzw. Werkzeugmaschinenaufnahmeschnittstelle der Bedienvorrichtung 10 ist die tragbare Werkzeugmaschine 12 aufgenommen. Fig. 1 zeigt die Bedienvorrichtung 10 in einer Schwenkposition A; Fig. 5 zeigt die Bedienvorrichtung 10 in beispielhaft vier möglichen Schwenkpositionen A, B, C, D. Viele Details sind vor allen Dingen anhand der Fig. 1 beschrieben, Fig. 5 verdeutlicht im Wesentlichen eine Auswahl möglicher Schwenkpositionen A, B, C, D der Bedienvorrichtung, welche über 150° hier beispielhaft in 10° Schritten verschwenkt und arretiert werden kann, wobei die Positionen A und D jeweils Endpositionen und die Positionen B, C beispielhafte Zwischenpositionen sind. Fig. 2, 3 und 4 zeigen die Bedienvorrichtung ohne tragbare Werkzeugmaschine 12 und ohne Akkupack 124 in einer perspektivischen Ansicht, einer Seitenansicht und einer Frontansicht.

An der tragbaren Werkzeugmaschine 12 ist eine Einsatzwerkzeugvorrichtung 50 angeordnet (vgl. insb. Fig. 1). Die tragbare Werkzeugmaschine 12 ist als elektrisch betreibbare Maschine, insbesondere als Gartengerät, bevorzugt wahlweise als Gras- oder Strauchschere (hier in der Grasscherenkonfiguration) ausgebildet. Die tragbare Werkzeugmaschine 12 weist ein Werkzeugmaschinengehäuse 52 auf. Das Werkzeugmaschinengehäuse 52 umschließt eine Antriebseinheit 54. Ferner weist die tragbare Werkzeugmaschine 12 eine Abtriebseinheit 56 auf. Die Antriebseinheit 54 ist als Elektromotoreinheit ausgebildet. Die Abtriebseinheit 56 ist zumindest als Kupplungs- und/oder Getriebeeinheit ausgebildet. Sie ist dazu vorgesehen ist, eine Antriebsbewegung, ein Antriebsmoment und/oder eine Antriebsdrehzahl der Antriebseinheit 54 auf die Einsatzwerkzeugvorrichtung 50 zu übertragen. Die tragbare Werkzeugmaschine 12 weist eine Griffvorrichtung 172 mit einem Handgriff 174 einem Freigabeelement 176 und einem Betätigungselement 178 auf. Zudem ist an der Griffvorrichtung 172 ein Zustandsanzeigeelement 180 vorgesehen. Über das Zustandsanzeigeelemente 180 kann beispielsweise ein regulärer Betrieb, ein Ladestand oder ein Fehlbetrieb der tragbaren Werkzeugmaschine 12, bzw. eines Akkupacks 124, angezeigt werden. Das Werkzeugmaschinengehäuse 52 weist zwischen dem Ende 182 des Handgriffs 174 und dem die Antriebseinheit 54 umgebenden Gehäuseabschnitt ein Verbindungsgehäuseabschnitt 184 auf. Der Verbindungsgehäuseabschnitt 184 verläuft winkelig zu einer Längserstreckung des Handgriffs 174, insbesondere in einem 30-60° Winkel. An diesem insbesondere schräg verlaufenden Verbindungsgehäuseabschnitt 184 ist rückwärtig eine Akkupackschnittstelle 74 angeordnet, die dazu vorgesehen ist den Akkupack 124 auch unmittelbar an der tragbaren Werkzeugmaschine 12 aufzunehmen. So kann der Akkupack 124 mechanisch und elektrisch unmittelbar mit der tragbaren Werkzeugmaschine verbunden werden. Andere Griffkonfigurationen oder Verbindungsgehäuseabschnitte sind ebenso denkbar.

Die Akkupackschnittstelle 74 der tragbaren Werkzeugmaschine 12 ist aber auch zur Verbindung mit der Bedienvorrichtung 10 vorgesehen. Die Bedienvorrichtung 10 weist hierzu nebst mechanischen Verbindungselementen auch eine Elektronikverbindungseinheit 20 mit Elektronikverbindungselementen 22 auf. Die die Elektronikverbindungselemente umgebende Kontur der Bedienvorrichtung ist hierzu zumindest teilweise wie die Kontur des Akkupacks 124 zur Verbindung mit der Akkupackschnittstelle 74 ausgebildet. Insbesondere sind Formschlusselemente analog zum Schnittstellenaufbau an einem Akkupack 124 gewählt, der zur Verbindung bzw. Nutzung mit der tragbaren Werkzeugmaschine 10 vorgesehen ist. Zur Stromübertragung dienen elektrische Kontaktelementen 136. Zur signaltechnischen Übertragung dienen insbesondere elektronische Kontaktelemente 138 (vgl. Fig. 2).

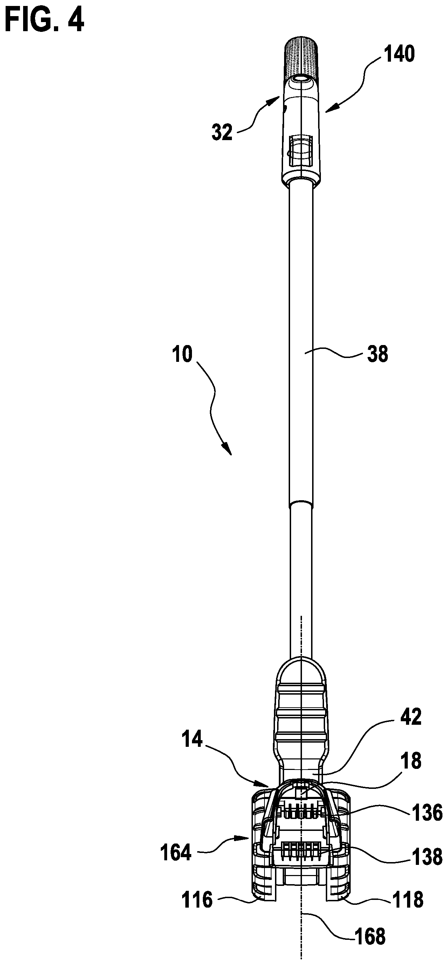

Zur Verbindung mit der Bedienvorrichtung 10 weist die Akkupackschnittstelle 74 der tragbaren Werkzeugmaschine nebst elektrischen Kontaktelementen (in Fig. 1 und 5 verdeckt), welche auch zur direkten Kontaktierung mit elektrischen Kontaktelementen des Akkupacks 124 vorgesehen sind, zusätzliche insbesondere elektronische Kontaktelemente auf, über die Signale von der Bedienvorrichtung 10, insbesondere über die vorzugsweise elektronischen Kontaktelemente 138, an eine Steuer- oder Regeleinheit der tragbaren Werkzeugmaschine 12 übertragen werden können. Die zusätzlichen Kontaktelemente sind korrespondieren zu den signaltechnischen Kontaktelementen 138 der Bedienvorrichtung 10 (vgl. Fig. 2 oder 4) ausgebildet.

Die Einsatzwerkzeugvorrichtung 50 für die tragbare Werkzeugmaschine 12 kann beispielsweise als Grasschneidvorrichtung, als Strauchschneidvorrichtung, als Heckenschneidvorrichtung, als Sägevorrichtung und/oder dergleichen ausgebildet sein. Die Einsatzwerkzeugvorrichtung 50 ist hier beispielhaft als Grasschneidvorrichtung ausgebildet und umfasst zumindest eine Einsatzwerkzeugeinheit 58. Hier umfasst die Einsatzwerkzeugvorrichtung 50 ferner ein Gehäuse 60, in dem zumindest ein beweglich gelagertes Schneidelement 62 der Einsatzwerkzeugeinheit 58 antriebseinheitsfrei angeordnet ist. Die Einsatzwerkzeugvorrichtung 50 ist mittels einer an ihr oder am Gehäuse 60 der Einsatzwerkzeugvorrichtung 50 angeordneten Verbindungseinheit (hier nicht näher dargestellt) formschlüssig und/oder kraftschlüssig mit einer Werkzeugaufnahme 68 der tragbaren Werkzeugmaschine 12 verbunden. Hierdurch wird das oder die Schneidelemente 62 antriebstechnisch mit der Antriebseinheit 54 bzw. der Abtriebseinheit 56 verbunden. Die tragbare Werkzeugmaschine 12 weist eine zur Verbindungseinheit der Einsatzwerkzeugvorrichtung 50 korrespondierende Verbindungseinheit (hier nicht näher dargestellt) auf, von der ein Betätigungselement 128 zum Lösen beispielsweise einer Verrastung zwischen tragbarer Werkzeugmaschine 12 und Einsatzwerkzeugvorrichtung 50 sichtbar ist. Alternative Verbindungs-, Ausgestaltungs- und/oder Antriebsübertragungsmöglichkeiten sind ebenso vorstellbar.

Die Bedienvorrichtung 10 (vgl. Fig. 1 bis 5) ist zur lösbaren Aufnahme, Energieversorgung und Bedienung der tragbaren Werkzeugmaschine 12 vorgesehen. Die Bedienvorrichtung 10 weist eine Griffeinheit 32, eine Werkzeugmaschinenaufnahmeeinheit 14 und eine Verlängerungseinheit 36 auf. Die Verlängerungseinheit 36 beabstandet die Griffeinheit 32 und Werkzeugmaschinenaufnahmeeinheit 14 zueinander. Sie umfasst insbesondere eine oder mehrere Verlängerungsstangen 38. Sie ist dazu vorgesehen Kabel zur Signalübertragung aufzunehmen. Prinzipiell könnte aber eine Signalübertragung von einer an der Griffeinheit 32 angeordneten Bedieneinheit 140, aufweisend vorteilhaft eine mehrere Bedien- und/oder Schaltelemente, auch kabellos an ein oder mehrere Signalübertragungselemente, insbesondere Signalübertragungselemente oder Kontaktelemente im Bereich der Werkzeugmaschinenaufnahmeeinheit 14, oder unmittelbar an die tragbare Werkzeugmaschine erfolgen. Die Verlängerungseinheit 36 ist insbesondere hohl ausgebildet. Voreilhaft verlaufen keine Kabel zur Stromversorgung der Antriebseinheit 54 der tragbaren Werkzeugmaschine in der Verlängerungseinheit 36, sondern nur Signalübertragungskabel oder -leitungen.

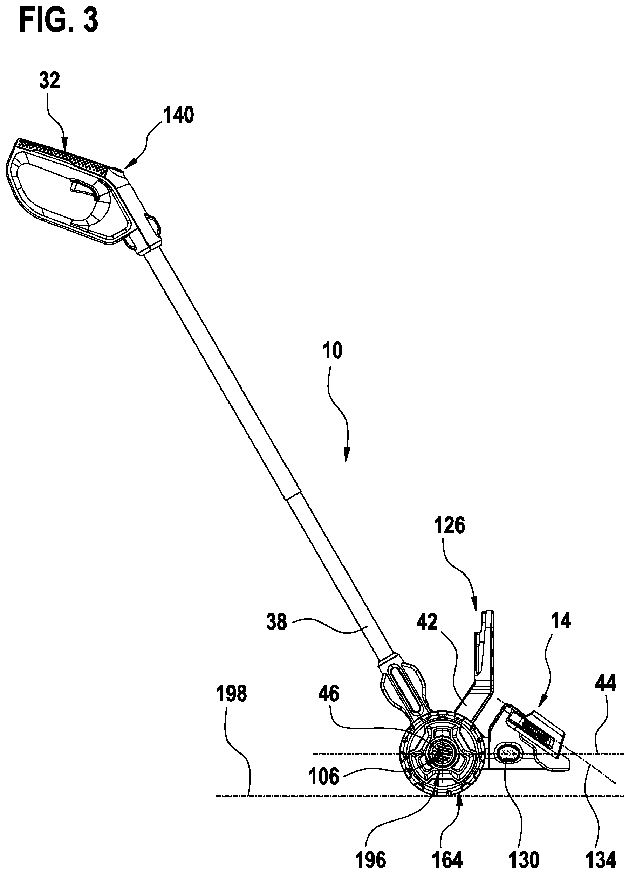

Ferner weist die Bedienvorrichtung 10 eine Akkupackaufnahmeeinheit 126 auf, insbesondere zur lösbaren Aufnahme und elektrischen Kontaktierung des Akkupacks 124 an/mit der Bedienvorrichtung 10, bevorzugt des Akkupacks 124 der sonst unmittelbar an der tragbaren Werkzeugmaschine 12, insbesondere an der Akkupackschnittstelle 74 (hier nicht im Detail gezeigt) der tragbaren Werkzeugmaschine 12, lösbar anbringbar ist. Die Akkupackaufnahmeeinheit 126 ist beabstandet zur Griffeinheit 32 angeordnet, insbesondere beabstandet durch die Verlängerungseinheit 36. Insbesondere ist die Akkupackaufnahmeeinheit 126 nicht an und/oder einstückig mit der Griffeinheit 32 oder zumindest Teilen des Griffgehäuses 31 der Griffeinheit 32 bzw. des Handgriffgehäuses oder dem Handgriff 33, ausgebildet. Bevorzugt ist die Akkupackaufnahmeeinheit 126 abstandstechnisch auch nicht im Bereich der der Griffeinheit 32 zugewandten Hälfte der Verlängerungseinheit 36 angeordnet oder im Bereich des der Griffeinheit 32 zugewandten Endes der Verlängerungseinheit 36. Bevorzugt schließt sich die Akkupackaufnahmeeinheit 126 nicht, insbesondere nicht unmittelbar, vor oder hinter der Griffeinheit 32 bzw. dem Handgriff 33 an. Insbesondere ist die Werkzeugmaschinenaufnahmeeinheit 14 und die Akkupackaufnahmeeinheit 126 näher am einen Ende 150, bzw. im Bereich des einen Endes 150, der Verlängerungseinheit 36 bzw. der Verlängerungs-, Führungs- und/oder Teleskopstange 38 angeordnet und die Griffeinheit 32 und/oder Bedieneinheit 140 am anderen Ende 152, insbesondere gegenüberliegenden Ende 152 der Verlängerungseinheit 36. Vorteilhaft ist die Griffeinheit 32 am einen distalen Ende 152 der Verlängerungseinheit 36 und/oder -stange 38 und die Akkupackaufnahmeeinheit 126 am oder im Bereich des gegenüberliegenden distalen Endes 150 der Verlängerungseinheit 36 und/oder -stange 38 angeordnet. Vorteilhaft ist die Akkupackaufnahmeeinheit 126 und/oder Akkupackschnittstelle unschwenkbar und/oder undrehbar relativ zu einer Lagereinheit 42 angeordnet, insbesondere unschwenkbar um eine Schwenkachse 46 und/oder undrehbar um eine Drehachse 44 der Bedienvorrichtung 10; wohingegen die Griffeinheit 32 schwenkbar in Richtung des Pfeils 154 (vgl. Fig. 1, 5), insbesondere um die Schwenkachse 46 und/oder die Werkzeugmaschinenaufnahmeeinheit 14 drehbar zur Lagereinheit 42, insbesondere zu einer Lagereinheitslängsachse 156 bzw. Drehachse 44 angeordnet ist. Vorteilhaft ist die Akkupackaufnahmeeinheit 126 einstückig mit dem Gehäuse der Lagereinheit 42 ausgebildet, vorteilhaft aus zwei Gehäuseschalen aufgebaut, welche bevorzugt in einer Gehäusetrennebene 168 aneinander anliegen. Es wird vorgeschlagen, dass eine Verbindungssteckachse 170 der Akkupackaufnahmeeinheit 126 entlang derer der Akkupack 124 auf die Akkupackaufnahmeeinheit 126 aufgesteckt bzw. in diese eingeführt werden kann, orthogonal zur Drehachse 44 der Werkzeugmaschinenaufnahmeeinheit bzw. der Bedienvorrichtung 10 ausgebildet ist und/oder orthogonal zu einer Standebene 198 (vgl. Fig. 3) der Bedienvorrichtung 10.

Die Werkzeugmaschinenaufnahmeeinheit 14 umfasst zur mechanischen Fixierung der tragbaren Werkzeugmaschine 12 eine Fixiereinheit, insbesondere mit Formschluss-, Klemm- und/oder Rastelementen. Bevorzugt weist sie Formschlusselemente auf, welche die tragbare Werkzeugmaschine 12, insbesondere das Gehäuse- und/oder den Verbindungsgehäuseabschnitt 184 dieser begrenzen, insbesondere eine Bewegbarkeit der tragbaren Werkzeugmaschine 12 in einem an der Werkzeugmaschinenaufnahmeeinheit 14 angeordneten Zustand begrenzen und/oder verhindern. Vorteilhaft bildet die Werkzeugmaschinenaufnahmeeinheit 14 eine Art halboffenen Gleitschuh aus, in den die tragbare Werkzeugmaschine entlang einer Verbindungssteckachse 134 geschoben werden kann. Die Werkzeugmaschinenaufnahme 14 bzw. der Gleitschuh begrenzt den Verbindungsgehäuseabschnitt 184 vorteilhaft in fünf Freiheitsgraden. Vorzugsweise umklammern gekrümmte Wandabschnitte 82, 84 den Verbindungsgehäuseabschnitt 184. Insbesondere sind die gekrümmten Wandabschnitte beabstandet zu einer Verbindungsebene, insbesondere orthogonal beabstandet zu einer Verbindungsebene, in welcher Elektronikverbindungselemente 22 angeordnet sind. Dadurch kann vorteilhaft eine Klemmung in Richtung der Verbindungsebene erzeugt werden und/oder Querbelastungen zwischen tragbare Werkzeugmaschine 12 und Bedienvorrichtung 10 besser/steifer übertragen werden. Die Fixiereinheit 16 umfasst ferner zumindest ein Fixierelement 18 zu einer lösbaren Fixierung der tragbaren Werkzeugmaschine 12 in einem an der Werkzeugmaschinenaufnahmeeinheit 14 angeordneten Zustand. Das Fixierelement 18 (vgl. Fig. 2) ist insbesondere als translatorisch und/oder rotatorisch verlagerbares Fixierelement 18 ausgebildet. Es rastet vorteilhaft in einer Fixierausnehmung der tragbaren Werkzeugmaschine lösbar und/oder federvorgespannt ein. Das Fixierelement 18 ist vorteilhaft zumindest indirekt über ein Betätigungs- und/oder Freigabeelement 130 (vgl. Fig. 3), verlagerbar, so dass durch Betätigung die tragbare Werkzeugmaschine 12 von der Werkzeugmaschinenaufnahmeeinheit 14 abgenommen werden kann. Das Betätigungs- und/oder Freigabeelement 130 ist vorteilhaft seitlich am Gehäuse der Werkzeugmaschinenaufnahmeeinheit 14 angeordnet, vorteilhaft gegenüber einem Betätigungs- und/oder Freigabeelement 158 (vgl. Fig. 2) zur Freigabe und Arretierung einer Verdrehung der Werkzeugmaschinenaufnahmeeinheit 14 gegenüber der Lagereinheit 42 bzw. der restlichen Bedienvorrichtung 10 um die Drehachse 44.

Ferner weist die Werkzeugmaschinenaufnahmeeinheit 14 zumindest eine Elektronikverbindungseinheit 20 auf. Diese weist zumindest ein, insbesondere eine Mehrzahl von Elektronikverbindungselementen 22, bevorzugt elektrische und signaltechnische Kontaktelemente 136, 138 auf. Die Elektrischen und signaltechnische Kontaktelemente 136, 138 sind beabstandet zueinander angeordnet, vorteilhaft jeweils in beabstandet zueinander ausgebildeten Reihen von Elektronikverbindungselementen 22 bzw. Kontaktelementen 136, 138. Vorteilhaft weisen die elektrischen und signaltechnischen Kontaktelemente 136, 138 einen Längsversatz 132 bezogen auf einer Verbindungssteckachse 134 der Werkzeugmaschinenaufnahme 14 auf. Die elektrischen Kontaktelemente 136 sind mit elektrischen Kontaktelementen der Akkupackaufnahmeeinheit 126 verbunden, hier über nicht dargestellte Kabel. Somit kann an den Kontaktelementen 136 bei an der Bedienvorrichtung 10 appliziertem Akkupack 124 dessen elektrische Spannung/Strom anstehen. Dadurch kann eine Energieversorgung der an der Bedienvorrichtung applizierten tragbaren Werkzeugmaschine 12, durch den an der Akkupackaufnahmeeinheit 126 der Bedienvorrichtung 10 angeordneten Ackupack 124, mittelbar über die Bedienvorrichtung 10, bzw. deren Werkzeugmaschinenaufnahmeeinheit 14, sichergestellt werden.

Die signaltechnischen Kontaktelemente 138 sind mit einer an der Griffeinheit 32 angeordneten Bedieneinheit 140 bzw. einer Schalteinheit 144 zumindest mittelbar (beispielweise über ein oder mehrere Elektronikbauteile wie PCB's Signalkabel oder dergleichen) verbunden. Eine Betätigung eines Bedienelements 72, insbesondere nach Betätigung eines Freigabeelements 142 (Sicherheitsschaltung) können so über die signaltechnischen Kontaktelemente 138 von der Bedienvorrichtung 10 auf die tragbare Werkzeugmaschine 12 zu deren zumindest mittelbaren Steuer- oder Regelung (zumindest Aktivierung/Deaktivierung, beispielweise über die Steuer- und Regeleinheit der tragbaren Werkzeugmaschine) übertragen werden. Auch ließen sich mitunter weitere Zustandssignale der tragbaren Werkzeugmaschine 12 und/oder des Akkupacks 124 an die Bedieneinheit 140 beispielweise eine Zustandsanzeige (hier nicht dargestellt) über die signaltechnischen Kontaktelemente und/oder -kabel übermitteln/übertragen. Die Bedieneinheit 140 weist zumindest ein elektrisches Schalterelement (hier nicht dargestellt) auf, das mittels des Bedienelements 72 der Bedieneinheit 140 von einem Bediener zu einer Inbetriebnahme der tragbaren Werkzeugmaschine 12 bzw. zu einer Unterbrechung eines Betriebs der tragbaren Werkzeugmaschine 12 in einem an der Werkzeugmaschinenaufnahmeeinheit 14 angeordneten Zustand der tragbaren Werkzeugmaschine 12 betätigbar ist. Das Schalterelement ist mittels eines Verbindungskabels (hier nicht gezeigt) mit der Elektronikverbindungseinheit 20, insbesondere mit Elektronikverbindungselementen 22 signaltechnisch verbunden. Zudem sind Kontaktelemente (hier nicht dargestellt) der Akkupackaufnahmeeinheit mit Elektronikverbindungselementen 22 (vgl. Fig. 2, 4) verbunden. Somit sind die Elektronikverbindungselemente 22 dazu vorgesehen, eine elektrische und/oder signaltechnische Verbindung zwischen einer Antriebseinheit und/oder Steuer- oder Regeleinheit (hier nicht näher dargestellt) der tragbaren Werkzeugmaschine 12, und der Bedieneinheit 140 und/oder Akkupackaufnahmeeinheit herzustellen, um eine Bedienung der tragbaren Werkzeugmaschine 12 in einem an der Werkzeugmaschinenaufnahmeeinheit 14 angeordneten Zustand mittels der Bedieneinheit 140 zu ermöglichen.

Die Akkupackaufnahmeeinheit 126 ist benachbart zur Werkzeugmaschinenaufnahmeeinheit 14 angeordnet. Ein Abstand 160, insbesondere ein minimaler Abstand, beträgt weniger als 30 cm, bevorzugt weniger als 20 cm, besonders bevorzugt von weniger als 15 cm. Der Abstand 160 von Akkupackaufnahmeeinheit 126 und Werkzeugmaschinenaufnahmeeinheit 14 ist kleiner, insbesondere sehr viel kleiner, als ein Abstand 162 von Akkupackaufnahmeeinheit 126 und/oder Werkzeugmaschinenaufnahmeeinheit 14 zur Griffeinheit 32.

Die Akkupackaufnahmeeinheit 126 ist separat von bzw. nicht einstückig mit der Werkzeugmaschinenaufnahmeeinheit 14 ausgebildet. Die Werkzeugmaschinenaufnahmeeinheit 14 ist drehbar zur Akkupackaufnahmeeinheit 126 ausgebildet. Die Akkupackaufnahmeeinheit 126 ist ortsfest zur Lagereinheit 42 bzw. Lagervorrichtung, insbesondere einstückig mit der Lagereinheit 42 ausgebildet. Die Lagereinheit 42 bildet eine Fahrgestelleinheit 164 bzw. ein Fahrgestell, die/das Rollelemente bzw. Räder 164 drehbar lagert. Die Lagereinheit 42 dient als Mittelstück zwischen Werkzeugmaschinenaufnahmeeinheit 14 und Verlängerungseinheit 36 und/oder Akkupackaufnahmeeinheit 126. Anstatt der Räder 164 könnten alternativ auch Rutschelemente, Bürsten oder Borsten oder dergleichen Verwendung finden, um die Bedienvorrichtung 10 gegenüber einem Untergrund reibungsarm und/oder leicht verlagerbar und/oder mitunter gegenüber einem welligen Untergrund ausgleichend, zu lagern. Die Akkupackaufnahmeeinheit 126 und/oder der Akkupack 124 ist im Bereich einer Mittenebene der Lagereinheit 42, insbesondere mittig relativ zu einer Gehäusetrennebene 168 der Lagereinheit 42, sozusagen vertikal über der durch die Rutsch- oder Rollelemente 164 abgestützten Lagereinheit 42 angeordnet.

Die Werkzeugmaschinenaufnahmeeinheit 14 und Akkupackaufnahmeeinheit 126 bzw. deren Schnittstellen und/oder Trennebenen zur tragbaren Werkzeugmaschine 12 und zum Akkupack 124 sind winkelig zueinander angeordnet, insbesondere in einem Winkel 200 von mindestens 85°, bevorzugt 110-160°, insbesondere rund 125°. Vorteilhaft ist eine Steckachsausrichtung bzw. Verbindungssteckachse 134, 170 in Richtung derer die tragbare Werkzeugmaschine 12 bzw. der Akkupack 124 mit der Werkzeugmaschinenaufnahmeeinheit 14 bzw. Akkupackaufnahmeeinheit 126 verbunden werden, winkelig zueinander angeordnet, vorteilhaft in den vorgenannten Winkeln. Die Verbindungssteckachse 170 der Ackupackaufnahmeeinheit 126 entlang derer der Akkupack 124 auf die Akkupackaufnahmeeinheit 126 aufgesteckt werden kann, ist orthogonal zur Drehachse 44 der Werkzeugmaschinenaufnahmeeinheit 14 ausgebildet. Dadurch lässt sich die Werkzeugmaschinenaufnahmeeinheit 14 bzw. die daran fixierte tragbare Werkzeugmaschine 12, insbesondere Grasschere, zur Ausführung eines Vertikalschnitts in einer Vertikalschnittkonfiguration überführen. Also statt der in Figur 1 abgebildeten Horizontalschnittkonfiguration um 90° um die Drehachse 44 verdreht. Unabhängig von der Schnittkonfiguration bzw. Drehkonfiguration der Werkzeugmaschinenaufnahmeeinheit 14 lässt sich der Akkupack 124 somit immer leicht an der Bedienvorrichtung 10 bzw. der Akkupackaufnahmeeinheit 126 fixieren. Die Akkupackaufnahmeeinheit 126 bzw. die Verbindungssteckachse 170 ist innerhalb einer die Lagereinheit 42, das Fahrgestell und oder die Fahrwerkseinheit 40 in Verbindungssteckachsrichtung 170 umgebenden Hüllkontur angeordnet wie man aus Zusammenschau von Fig. 1 und 4 ableiten kann. Optional kann die Bedienvorrichtung 10 ein Anzeigeelement im Bereich oder an der Griffeinheit 32 aufweisen, insbesondere integriert in das Griffgehäuse 31 der Griffeinheit 32, dass eine Zustands- und/oder Ladestandanzeige (hier nicht dargestellt) der an der Werkzeugmaschinenaufnahmeeinheit 14 angeordneten tragbaren Werkzeugmaschine 12 und/oder des an der Akkupackaufnahmeeinheit 126 angeordneten Akkupack 124 ausgibt, insbesondere anzeigt, bevorzugt als Ampelfarb-, Licht-, Symbol- und/oder Füllstandsanzeige.

Zu einer Kopplung der tragbaren Werkzeugmaschine 12 mit der Werkzeugmaschinenaufnahmeeinheit 14 muss zuerst der Akkupack 124 von der Akkupackschnittstelle 74 der Werkzeugmaschine entfernt sein. Dann kann die tragbare Werkzeugmaschine 12, bzw. deren Verbindungsgehäuseabschnitt 184, mit der Werkzeugmaschinenaufnahmeschnittstelle 186 der Werkzeugmaschinenaufnahmeeinheit 14 verbunden werden, insbesondere durch einschieben der tragbaren Werkzeugmaschine 12 in Richtung der Verbindungssteckachse 134. Die Werkzeugmaschinenaufnahmeschnittstelle 186 weist orthogonal zur Verbindungsebene bzw. der Verbindungssteckachse 136 zwei beabstandete, gegenüberliegende Wandschenkel 78, 80 auf. An deren freien Enden kragen einander zugewandte gekrümmte Wandabschnitte 82, 84. Der Abstand der Wandschenkel 78, 80 bzw. Wandabschnitte 82, 84 verjüngt sich in Richtung der Verbindungssteckachse 134 (von den signaltechnischen Kontaktelementen 138 in Richtung des Fixierelements 18). Es bildet sich sozusagen ein halboffener Aufnahmeschuh 188 als Werkzeugmaschinenaufnahmeschnittstelle 186, an dessen Spitze vorteilhaft eine halbkreisförmige Wandung 192, die Wandschenkel 78,80 verbindet. In diesen Aufnahmeschuh 188 kann die tragbare Werkzeugmaschine 12 bzw. deren Verbindungsgehäuseabschnitt 184, zu einer Verbindung mit der Bedienvorrichtung 10 eingeschoben werden.

Der Verbindungsgehäuseabschnitt 184 weist korrespondierend zu den Wandschenkel 78, 80 bzw. Wandabschnitten 82, 84 Gleitflächen und/oder Verstärkungsabschnitte und/oder Klemmflächen 206 auf. Insgesamt ist die Werkzeugmaschinenaufnahmeschnittstelle 186 von fünf Seiten begrenzt und ermöglicht dadurch eine formschlüssige Aufnahme der tragbaren Werkzeugmaschine von diesen fünf Seiten. Die verbleibende sechste Seite (in Richtung der Verbindungssteckachse 134 ist zum einschieben der tragbaren Werkzeugmaschine 12 offen - dieser Freiheitsgrad wird durch das lösbare Einrasten des Fixierelements 18 in eine Fixierausnehmung der tragbaren Werkzeugmaschine begrenzt.

Nach der Einführung der tragbare Werkzeugmaschine 12 in die Werkzeugmaschinenaufnahmeeinheit 14 in Richtung der Verbindungssteckachse 134 kann also ein insbesondere federvorgespanntes Fixierelement 18 der Werkzeugmaschinenaufnahmeeinheit 14, welches über das Betätigungs-/ Freigabeelement 130 verlagerbar ist, in die korrespondierende Fixierausnehmung (hier nicht dargestellt) der tragbaren Werkzeugmaschine 12 greifen und diese so auch in Richtung des sechsten Freiheitsgrads sichern. Alternative Verbindungselemente oder -vorrichtungen sind gleichsam denkbar.

Beim Einführen der tragbaren Werkzeugmaschine in Werkzeugmaschinenaufnahmeeinheit 14 wird zudem eine Kontaktierung der elektrischen und signaltechnischen Kontaktelemente 136, 138 der Elektronikverbindungseinheit 20 bzw. Elektronikverbindungselemente 22 hergestellt. Hierdurch ist die tragbare Werkzeugmaschine 12 in einem an der Werkzeugmaschinenaufnahmeeinheit 14 angeordneten Zustand fixiert und elektrisch und/oder signaltechnisch mit der Bedienvorrichtung 10, insbesondere elektrisch mit der Akkupackaufnahmeeinheit 126 und signaltechnisch mit der Bedieneinheit verbunden.

Ferner umfasst die Bedienvorrichtung 10 zumindest eine Lagereinheit 42, die die Werkzeugmaschinenaufnahmeeinheit 14 drehbar um zumindest die Drehachse 44 oder Lagerachse lagert und die Verlängerungseinheit 36 schwenkbar um die Schwenkachse 46 lagert. Die Lagereinheit 42, kann auch aus mehreren Lagereinheiten ausgebildet sein, insbesondere einer zur drehbaren Lagerung der Werkzeugmaschinenaufnahmeeinheit 14 und einer zur schwenkbaren Lagerung der Griffeinheit 32 bzw. Verlängerungseinheit 36. Die Lagereinheit 42 lagert die Werkzeugmaschinenaufnahmeeinheit 14 zur Griffeinheit 32 bzw. Verlängerungseinheit 36 dreh- bzw. schwenkbar, vorteilhaft um die zwei zumindest im Wesentlichen quer zueinander verlaufenden Dreh- und Schwenkachsen 44, 46. Die Dreh- und Schwenkachse 44, 46 verlaufen, projiziert in eine Ebene, zumindest im Wesentlichen senkrecht zueinander, vorteilhaft spannen diese Dreh- und Schwenkachse 44, 46 sogar die Ebene auf und schneiden sich somit. Zu einer Fixierung der Werkzeugmaschinenaufnahmeeinheit 14 in einer Drehposition relativ zur Lagereinheit 42, umfasst die Werkzeugmaschinenaufnahmeeinheit 14 zumindest eine Drehfixiereinheit 98 von dem lediglich das zugehörige Freigabeelement 158 zu sehen ist. Die Drehfixiereinheit 98 kann beispielsweise ein Drehfixierelement und ein Drehfixierfederelement (hier beide nicht dargestellt) aufweisen, das das Drehfixierelement in zumindest eine Richtung mit einer Federkraft beaufschlagt. Das Drehfixierelement ist als Rastelement ausgebildet, das zu einer Fixierung der Werkzeugmaschinenaufnahmeeinheit 14 um die Drehachse 44 mit Rastausnehmungen der Lagereinheit 42 zusammenwirkt oder umgekehrt (hier nicht dargestellt).

Die Lagereinheit 42 weist zudem eine Schwenkfixiereinheit 106 auf, die zu einer Fixierung der Verlängerungseinheit 36 nach einer Schwenkbewegung um die Schwenkachse 46 der Bedienvorrichtung 10 bzw. der Lagereinheit 42 vorgesehen ist. Die Schwenkfixiereinheit 106 kann mit einem Freigabeelement 196 ausgelöst werden. Somit kann eine Fixierung der Bedienvorrichtung 10 in unterschiedlichen Schwenkpositionen hier beispielhaft A, B, C, D (vgl. Fig. 5) der Verlängerungs- bzw. Griffeinheit 32, 36 relativ zur Lagereinheit 42 bzw. Werkzeugmaschinenaufnahmeeinheit 14 erreicht werden. Auf die innenliegende Fixiervorrichtung soll nicht weiter eingegangen werden.

Die Bedienvorrichtung 10 kann mittels der zumindest eine Fahrwerkseinheit 40, mittels deren die Werkzeugmaschinenaufnahmeeinheit 14 auf einem Untergrund verfahrbar ist, gegenüber dem Untergrund gelagert werden. Die Fahrwerkseinheit 40 umfasst zwei Radelemente 116, 118. Die Radelemente 116, 118 sind drehbar an einem Fahrgestell bzw. Trägerelement (hier nicht näher dargestellt) der Fahrwerkseinheit 40 gelagert. Das Fahrgestell ist durch die Lagereinheit 42 gebildet.

Vorteilhaft ist ein Schwerpunkt 202 des Werkzeugmaschinensystem 48 wenn der Akkupack 124 an der Akkupackaufnahmeeinheit 126 aufgenommenem und/oder die tragbare Werkzeugmaschine 12 an der Werkzeugmaschinenaufnahmeeinheit 14 aufgenommener ist, im Bereich der Akkupackaufnahmeeinheit 126 und/oder in einem Abstandsradius 204 um die Akkupackaufnahmeeinheit 126 von weniger als 40 cm, bevorzugt weniger als 20 cm, besonders bevorzugt von weniger als 15 cm, bevorzugt zwischen der Akkupackaufnahmeeinheit 126 und der Verlängerungseinheit 36, insbesondere der Verlängerungsstange 38.

## Patentansprüche

1. Bedienvorrichtung (10), insbesondere Verlängerungsgriffbedienvorrichtung, zur Aufnahme, Energieversorgung und Bedienung einer tragbaren Werkzeugmaschine (12), insbesondere über deren Akkupackschnittstelle (74), aufweisend eine Griffeinheit (32), eine Werkzeugmaschinenaufnahmeeinheit (14), eine Verlängerungseinheit (36) zur Beabstandung von Griffeinheit (32) und Werkzeugmaschinenaufnahmeeinheit (14), insbesondere eine Verlängerungsstange (38), und eine Akkupackaufnahmeeinheit (126), insbesondere zur lösbaren Aufnahme und elektrischen Kontaktierung eines Akkupacks (124), bevorzugt des Akkupacks (124) der tragbaren Werkzeugmaschine (12), **dadurch gekennzeichnet, dass** die Akkupackaufnahmeeinheit (126) beabstandet zur Griffeinheit (32) ausgebildet ist, insbesondere beabstandet durch die Verlängerungseinheit (36).

2. Bedienvorrichtung (10) nach Anspruch 1, **dadurch gekennzeichnet, dass** die Akkupackaufnahmeeinheit (126) benachbart zur Werkzeugmaschinenaufnahmeeinheit (14) angeordnet ist, insbesondere mit einem Abstand von weniger als 30 cm, bevorzugt von weniger als 20 cm, besonders bevorzugt von weniger als 15 cm.

3. Bedienvorrichtung (10) nach Anspruch 1 oder 2, **dadurch gekennzeichnet, dass** die Akkupackaufnahmeeinheit (126) separat von der Werkzeugmaschinenaufnahmeeinheit (14) ausgebildet ist, insbesondere nicht einstückig mit der Werkzeugmaschinenaufnahmeeinheit (14) ausgebildet ist, bevorzugt wobei die Werkzeugmaschinenaufnahmeeinheit (14) drehbar zur Akkupackaufnahmeeinheit (126) ausgebildet ist.

4. Bedienvorrichtung (10) nach einem der vorhergehenden Ansprüche, **dadurch gekennzeichnet, dass** die Akkupackaufnahmeeinheit (126) ortsfest zu einer Lagereinheit (42), insbesondere einstückig mit einer Lagereinheit (42), insbesondere ortsfest zu bzw. einstückig mit einer Fahrgestelleinheit (164), ausgebildet ist.

5. Bedienvorrichtung (10) nach einem der vorhergehenden Ansprüche, **dadurch gekennzeichnet, dass** die Werkzeugmaschinenaufnahmeeinheit (14), die Verlängerungseinheit (36) und/oder die Griffeinheit (32) dreh- und/oder schwenkbar zur Akkupackaufnahmeeinheit (126) und/oder Lagereinheit (42) ausgebildet ist/sind.

6. Bedienvorrichtung (10) nach einem der vorhergehenden Ansprüche, **dadurch gekennzeichnet, dass** die Werkzeugmaschinenaufnahmeeinheit (14) und Ackupackaufnahmeeinheit (126) winkelig zueinander angeordnet sind, insbesondere die Verbindungssteckachse (134, 170) der Werkzeugmaschinenaufnahmeeinheit (14) und der Akkupackaufnahmeeinheit (126) in deren Richtung die tragbare Werkzeugmaschine 12 bzw. der Akkupack 124 mit der Werkzeugmaschinenaufnahmeeinheit 14 bzw. Akkupackaufnahmeeinheit 126 verbindbar sind, winkelig zueinander angeordnet sind, insbesondere in einem Winkel (200) von mindestens 90°, bevorzugt 110-160°, insbesondere rund 125°.

7. Bedienvorrichtung (10) nach einem der vorhergehenden Ansprüche, **dadurch gekennzeichnet, dass** die Werkzeugmaschinenaufnahmeeinheit (14) elektrische und signaltechnische Kontaktelemente (136, 138), insbesondere beabstandet voneinander ausgebildete elektrische und signaltechnische Kontaktelemente (136, 138), bevorzugt einen Längsversatz (132) bezüglich einer Verbindungssteckachse (174) zum Verbinden einer tragbaren Werkzeugmaschine (12) mit der Werkzeugmaschinenaufnahmeeinheit (14), aufweisen.

8. Bedienvorrichtung (10) nach einem der vorhergehenden Ansprüche, **dadurch gekennzeichnet, dass** eine Verbindungssteckachse (170) entlang derer ein Akkupack (124) auf die Akkupackaufnahmeeinheit (126) aufgesteckt werden kann, orthogonal zu einer Drehachse (44) ausgebildet ist, um die die Werkzeugmaschinenaufnahmeeinheit (14) relativ zu einer Lagereinheit (42) drehbar ist.

9. Bedienvorrichtung (10) zumindest nach dem Oberbegriff des Anspruchs 1, insbesondere nach einem der vorhergehenden Ansprüche, **dadurch gekennzeichnet, dass** die Bedienvorrichtung (10) ein Anzeigeelement im Bereich der Griffeinheit (32) aufweist, insbesondere integriert in das Griffgehäuse der Griffeinheit (32), dass eine Zustands- und/oder Ladestandanzeige einer an der Werkzeugmaschinenaufnahmeeinheit (14) angeordneten tragbaren Werkzeugmaschine (12) und/oder eines an der Akkupackaufnahmeeinheit (126) angeordneten Akkupack (124) ausgibt, insbesondere anzeigt.

10. Werkzeugmaschinensystem (48) mit einer Bedienvorrichtung (10) nach einem der vorhergehenden Ansprüche und mit einer tragbaren Werkzeugmaschine (12) und/oder einem Akkupack (124).

11. Werkzeugmaschinensystem (48) nach Anspruch 10, aufweisend einen Schwerpunkt (202) der bei an der Akkupackaufnahmeeinheit (126) aufgenommenem Akkupack (124) und/oder an der Werkzeugmaschinenaufnahmeeinheit (14) aufgenommener Werkzeugmaschine im Bereich der Akkupackaufnahmeeinheit (126) und/oder in einem Abstandsradius (204) um die Akkupackaufnahmeeinheit (126) von weniger als 40 cm, bevorzugt weniger als 20 cm, besonders bevorzugt von weniger als 15 cm, bevorzugt zwischen der Ackupackaufnahmeeinheit (126) und der Verlängerungseinheit (36), insbesondere Verlängerungsstange (38), zum Liegen kommt.
